# EUROPEAN PATENT APPLICATION

(11) **EP 1 746 542 A1**
(43) Date of publication of application: **24.01.2007**
(21) Application number: 05106601.7
(22) Date of filing: 19.07.2005
(51) Int. Cl.: G06T 17/40, G06T 15/40, G06T 11/60

(54) **System and method for managing digital image layers**

(71) Applicant: SPARK VISION AB, 436 34 Askim (SE)
(72) Inventor: Larking, Patrik, 433 70 Sävedalen (SE)
(74) Representative: Lind, Urban Arvid Oskar

(57) **Abstract**

A method for user adaptation of interactive image data, comprising the steps of providing a two-dimensional digital image as a view of a virtual three-dimensional digital image, such as a three-dimensional computer-aided design (CAD) drawing, defining at least one subsection in said two-dimensional digital image comprising at least two layers stacked on top of each other. Furthermore is each of said layers associating each with a depth identification tag corresponding to said layers depth position in said stack of layers, wherein each of said layers are independently shufflable and/or exchangeable in said stack of layers. Preferably the user is given the ability to, through interaction, perform said shuffling and/or exchanging of said layers. The present invention makes it possible for a user to in a novel way and bandwidth saving way, faster and with a reduced download time, view and change between different components and accessories. In a similar manner, the invention makes it possible to decrease the amount of data needed to be stored on a storage medium. Accordingly, these advantages will hence decreasing cost for both the user and the organization providing the image data.

## Description

### Technical field

The present invention relates to a method for user adaptation of interactive image data. The present invention also relates to a corresponding computer system for performing such a method. A general aim of the present invention is to enable efficient storage, composition and transmission of images, where a multitude of variants of an image exist.

### Technical background

Presently, car manufacturer offers users the opportunity to perform a "virtual-tour" to be able to select between different car models in different color ranges with different accessories. A system for performing such a virtual-tour and to present different alternatives is based on the users interactive input through, in many cases, a web-interface using a mouse and a keyboard. The system receives the users interactive selection of car model, color or a specific accessory, and an image showing the selected configuration will be presented on a user display. As the user selects and browses through the different available models, colors and accessories, an updated version of the image will be presented.

This type of system is not only used in the car industry, but could for example be used for interactive interior design planning and selection.

Such a system is disclosed in US20050081161, wherein the system is arranged in a client-server computing environment, where the system is provided for generating a perspective view of an object positioned within a scene. The client is configured for communicably accessing of a server, and includes a client application configured for scene editing and rendering using a graphical user interface (GUI).

This interactive interior design system, and other systems currently available on the market, updates the entire scene as the users selects and browses through different configurations, for example different available car models, colors and accessories.

As understood, a very large number of alternative configurations can be available and hence a large number of images need to be configured to correspond to all of theses available configurations. As a result, great processing power and a high bandwidth for transferring the images, together with an ability to store a large amount of data, for example images of each of the different configurations, are necessary.

It is therefore an object of the present invention to provide a novel method for user adaptation of interactive image data that provides a solution to at least some of the above-mentioned problems.

### Summary of the invention

The above need is met by a method for user adaptation of interactive image data and a corresponding computer system for performing such a method, as defined in independent claims 1 and 6. The dependent claims define advantageous embodiments in accordance with the present invention.

According to a first aspect of the invention, there is provided a method for user adaptation of interactive image data, comprising the steps of providing a two-dimensional digital image as a view of a virtual three-dimensional digital image, such as a three-dimensional computer-aided design (CAD) drawing, defining at least one subsection in said two-dimensional digital image comprising at least two layers stacked on top of each other. Furthermore is each of said layers associating each with a depth identification tag corresponding to said layers depth position in said stack of layers, wherein each of said layers are independently shufflable and/or exchangeable in said stack of layers.

Preferably, the layers are provided with a depth identification tag associating individual depth position values for different parts of said layers, and most preferably the depth identification tag associates an individual depth position value for each pixel in said layers. By means of the association of depth values to each image element (pixel) in the layers, a very efficient way to make layers individually exchangeable even in complex images is provided, e.g. where the layers cross each other in the depth direction, are intertwined etc.

Thus, the layers overlapping each other do not necessarily have the same depth order in all the image elements (pixels) of the layers. Thus, is such a special case, the layers can in this case be regarded as defining non-parallel planes.

Preferably the user is given the ability to, through interaction, perform said shuffling and/or exchanging of said layers.

An image layer can be visualized as a sheet of transparent film. This sheet can have an the whole or part of an image already on it, just like a colour transparency, or be empty. These layers can be stacked one on top of the other; made more or less transparent so that the one(s) underneath may or may not be seen; labeled for identification; re-arranged in the stack according to depth data; made visible or invisible; and/or linked so that moving an image on one layer will also simultaneously move other images on correspondingly linked layers. Furthermore, layers can be partially or completely erased to reveal or cause to hide what is beneath. In a preferred embodiment of the present invention, at least one of the layers that are stacked on top of each other show exchangeable components and accessories.

A depth identification tag (depth value; z-value) can be compared with a "layer number" that corresponds to where in a "layer stack" a certain layer is positioned. The z-value can be an integer or any other depth indication, but is preferably a real number. These depth identification tags may be dynamical and may be swapped, thereby changing a certain layers position in the "layer stack" (layers depth position). As the layers are exchangeable, a "new layer" being introduced in the layer stack can either take the layer stack position of the "old layer" (using the old depth identification tag), be allocated a new position and a new depth identification tag or be arranged in accordance with a predetermined depth value (z-value). This makes it possible to only exchange one layer of a subsection instead of reloading the whole two-dimensional image, e.g. when a the user requests an change in a certain component or accessory, such as, in the display of a car, changing the color of the car body, changing the rim type, introducing a sliding roof, etc. Hence, this first aspect of the present invention makes it possible for a user to view and change between different components and accessories in a novel way, which, in comparison to heretofore known methods, requires less bandwidth and processing capacity, which is faster and where the download time can be reduced. In a similar manner, this aspect makes it possible to decrease the amount of data needed to be stored on a storage medium. Accordingly, these advantages will hence decrease costs involved for both the user and service provider providing the image data.

Hence the present invention makes it possible to generate a two-dimensional view, create, on-demand or in advance, a number of layers for certain subsections, e.g. corresponding to alternative design devices, and independently shuffle and/or exchange the layers in the stack of layers.

According to one embodiment of the present invention, the two-dimensional digital image, said subsections and at least one alternative layer are stored on a storage medium. The type of storage medium used can be chosen dependent on the type of computer system that is used to perform the method. In one embodiment, the computer system used to perform the method is a single standalone computer, such as a PC, wherein the storage medium preferably is a removable disk, such as a CD or DVD (or any type of removable media). In this case, the above-discussed method enable a very efficient use of the storage capacity, since a very large number of permutations of an image can be stored as a limited number of combinable layers.

In another embodiment, the computer system used to perform the method is a client-server computer system, communicating over a network based transmission system, such as for example the Internet. When using this type of configuration it is possible to store, or generate on demand, the two-dimensional digital image, the subsections and at least one alternative layer on the server, and using a client side computer application, with a graphical user interface (GUI), as a mean for interacting with the user. As understood by the person skilled in the art, there are a great number of available solutions to how data could be stored. It is also understood that the image data can be stored locally on the clients computer system as well as in the server. Accordingly, the present invention offers a great advantage due to its ability to fast and with a low bandwidth performing the above described method. Furthermore, the method offers a high interactivity with the user.

In a preferred embodiment of the present invention, the above-described steps of providing, defining and associating are executed in a processing device and at least one alternative layer is transferred from the storage medium to the processing device upon user interaction. Furthermore, the exchanging of layers is done on-demand and in interaction with the storage medium. This generally means that if a user selects a new image configuration the corresponding parts in the image will be updated accordingly. Since the image is divided into sub-sections and layers, only the subsection layers corresponding to the new configuration requested by the user will be updated. Hence, this will provide for a decrease in bandwidth needed when updating the image data. By the expression "on-demand" is described an action or step performed as the request the user introduced during interactions with computer system performing the method.

In yet another preferred embodiment the provision of a two-dimensional digital image is provided as a two-dimensional reading of computer generated three-dimensional design data, such as a Computer Aided Design (CAD). For example, this allows for a car manufacture to provide computer generated layers based on constructional designs. Furthermore, since a three-dimensional computer generated CAD-image already comprises depth components (z-values) and layer information, the conversion from three-dimensional CAD-images to two-dimensional readings/images suitable for the above described method is advantageous since information about suitable subsections, layers and depth values are easily and automatically derivable from the CAD-image.

According to a further aspect of the present invention there is provided a computer system for user adaptation of interactive image data, comprising means for providing a two-dimensional digital image as a view of a virtual three-dimensional digital image, means for defining at least one subsection in said two-dimensional digital image comprising at least two layers stacked on top of each other and means for associating each of said layers with a depth identification tag corresponding to said layers depth position in said stack of layers, wherein each of said layers are independently shufflable and exchangeable in said stack of layers. As described above in relation to the first aspect of the present invention, this novel computer system for user adaptation of interactive image data, provides a plurality of advantages such as saving of bandwidth; increased speed; reduced download time; etc. for view and change between different components and accessories. Furthermore, the computer system according to the present invention makes it possible to decrease the amount of data needed to be stored on a storage medium. Accordingly, these advantages will decrease costs for both the user and the organization providing the image data.

The computer system could either be arranged in a single stand-alone computer configuration or in a client-server configuration, wherein the client and server are interactively connected using communication means, and wherein the two-dimensional digital image, the subsections and at least one alternative layer are stored on a storage medium. Further, the client-server computer system can be configured to transfer at least one alternative layer from the storage medium to the client upon user interaction. Preferably, the computer system is configured to comprise means for this interactive communication between the computer system and the user. Such communication means can for example be a keyboard, a mouse and a computer screen. As understood by the person skilled in the art, a plurality of alternative interactive means can also be utilized, such as interaction by voice or using a camera for detection of interactive movements performed by the user.

In a preferred embodiment, provision of a two-dimensional digital image is provided as a two-dimensional reading of computer generated three-dimensional design data, such as a Computer Aided Design (CAD), with advantages as described above.

According to still another aspect of the present invention a software computer product is provided for performing the steps of providing a two-dimensional digital image as a view of a virtual three-dimensional digital image, defining at least one subsection in said two-dimensional digital image comprising at least two layers stacked on top of each other and associating each of said layers with a depth identification tag corresponding to said layers depth position in said stack of layers,
wherein each of said layers are independently shufflable and exchangeable in said stack of layers. It should be understood that the software computer product can be arranged for carrying out any of the methods of the present invention. The computer program product can be stored on a machine readable data carrier such as a diskette, a tape, an optical disk such as a CD-ROM or DVD-ROM, a hard disk, solid state memory, etc.

By means of this aspect, similar advantages are obtained as described in the foregoing in relation to the other aspects of the present invention.

According to still another aspect of the present invention there is provided a method for composing a two-dimensional digital image, comprising the steps of:
- providing at least two two-dimensional image layers, each layer being associated with at least a subsection of said digital image, wherein each layer consists of several image elements;
- associating each image element of the layers with a depth value; and
- combining said layers for composition of said digital image, wherein in overlapping parts of said layers, the order of overlapping image elements is determined based on the depth values associated with said overlapping image elements.

By means of this aspect, similar advantages as related above with reference to the other aspects are obtainable. Specifically, the association of depth values to each image element (pixel) in the layers provides a very efficient way to make layers individually exchangeable even in complex images, where the layers cross each other in the depth direction, are intertwined etc.

As a simple example, an image illustrating a person stepping in to a car could comprise one image layer illustrating the person and one image layer illustrating the car. In this example, the image layers will be intertwined, and in the resulting image, the image elements associated with the part of the person being outside the car will be visible (i.e. will have depth values less deep than in the overlapped image elements of the car), whereas the image elements associated with the part of the person being inside the car will be invisible if that part is occluded by the car body (i.e. will have depth values more deep than in the overlapped image elements of the car). The image layer of the car or the person can then be exchanged or modified, but still maintaining the depth wise relationship between the layers.

According to another aspect of the invention there is provided a two-dimensional digital image comprising at least two two-dimensional image layers, each layer being associated with at least a subsection of said digital image, wherein each layer consists of several image elements, each image element of the layers being associated with a depth value;
wherein in overlapping parts of said layers, the order of overlapping image elements is determined based on the depth values associated with said overlapping image elements.

By means of this aspect, similar advantages as related above with reference to the other aspects are obtainable.

Further features and advantages of the present invention will become apparent when studying the appended claims and the following description. Those skilled in the art will appreciate that different features of the present invention can be combined in other ways to create embodiments other than those described in the following.

### Brief description of the drawings

By way of example, the present invention will now be described in more detail with reference to the accompanying drawings, in which:
Figure 1 illustrates the steps of performing the method according to one embodiment of the present invention;
Figure 2 illustrates an example of a schematic view of image data adapted in accordance to the present invention;
Figure 3 illustrates an overview of a computer system configured in client-server computer configuration according to an embodiment of the present invention;
Figure 4 schematically illustrates a situation where two layers of an image are associated with a common depth value; and
Figure 5 schematically illustrates a situation where two layers of an image have a multitude of image elements (pixels), each associated with a depth value.

### Detailed description of the preferred embodiment

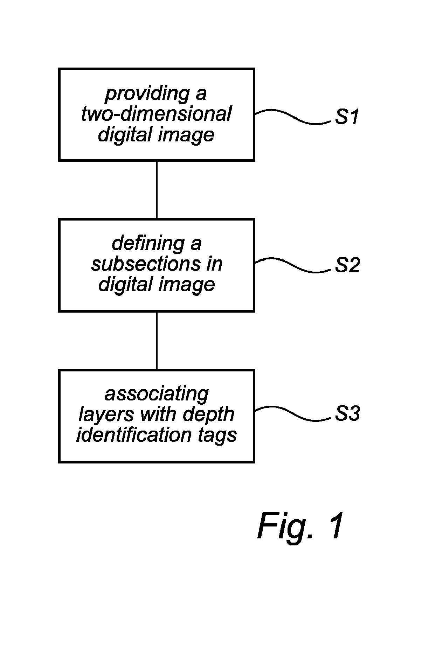

Figure 1 illustrates the steps of performing the method according to one embodiment of the present invention. The steps includes providing, in step S1, a two-dimensional digital image, defining, in step S2, at least one subsection in said two-dimensional digital image, and at least two separate layers within said subsection, and associating, in step S3, each of said layers with a depth identification tag. These process steps may carried out essentially simultaneously, or in various order.

In the step S1 of providing a two-dimensional digital image, a two-dimensional digital image is provided that has depth information embedded into the image. This type of two-dimensional digital image can for example be obtained by making a 2D-view from a three-dimensional computer generated three-dimensional CAD image, whereby the depth information is readily obtainable from the CAD image.

The step S2 of defining at least one subsection in the two-dimensional digital image can be preformed before or after step S1, or even essentially simultaneously with this step. The subsections can be, but are not limited to, rectangular sections. Each of the subsections are constructed of at least two layers, but will preferably consist of a plurality of layers. Preferably, the extension of all the layers of the subsections are similar or identical, whereby the frames of the layers coincide. However, it is also possible to have overlapping frames of different extension, shapes and position, whereby the frame of one layer may be arranged within the frame of another, or where the frames of some layers only partly overlap. The layers may be at least partly transparent or semi-transparent, whereby underlying layers are at least partly visible through the overlaying layer(s).

The subsections may be defined manually, e.g. by marking the subsections with a computer aided drawing tool. However, preferably the indication of subsections is made automatically or at least semi-automatically. For example, when the 2D-image is generated from an original 3D-image, such as a CAD-image, the subsections may be automatically defined for certain parts of the displayed object. These objects may be predetermined, or selected manually. If e.g. a car is to be displayed, parts such as the car housing, the rims, the car interior, etc, may be predetermined to form subsections, whereby such subsections be defined automatically for these parts when generating the 2D-image. Layers for these subsections may then be defined automatically for every separate part of the car the environment being within the ambits of the predetermined parts, in the view chosen for the 2D image, and arranged in front of or behind the predetermined parts.

In the step S3 each of the layers for each subsection is associated with a depth identification tag. This depth identification tag, or z-value, can be associated with a number that corresponds to wherein the stack of layers a certain layer should be positioned. The z-value can be an integer or any other depth indication, but is preferably a real number. As discussed above, the depth information is derivable e.g. from a original 3D-image, such as a CAD-image.

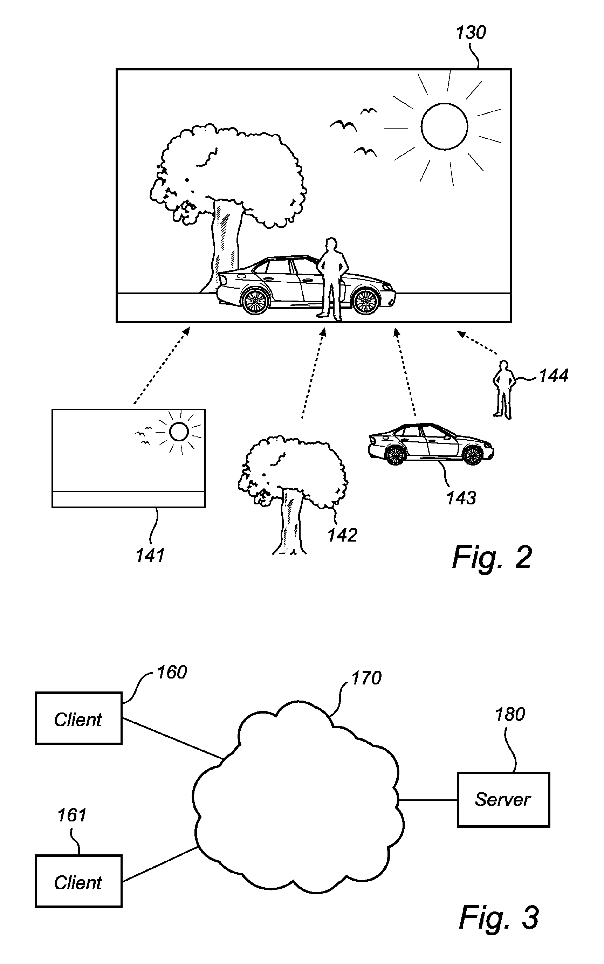

Reference is now made to figure 2, wherein a schematic view of image data adapted in accordance to the present invention is presented. At the lower end of figure 2 is shown a plurality of layers 141, 142, 143 and 144. These layers 141, 142, 143 and 144 are in the two-dimensional subsection 130 positioned according to the z-value (depth identification tag) associated with each of the layers 141, 142, 143 and 144. As will be understood, each of these layers can be shuffled and/or exchanged, resulting in a new image, wherein for example one or a plurality of the layers have been exchanged with new layers. From this illustrative example, it is apparent that the layers could be modified or exchanged separately, without affecting the other layers. For example, layer 143 could be exchanged, e.g. to an image of another car, but assuming that the new layer has the same depth value, this new layer would still be placed behind the person illustrated in layer 144 and in front of the tree illustrated in layer 142. In a similar fashion, the depth value of layer 143 and/or 144 may be modified, so that the person illustrated in layer 144 would instead appear to be standing behind the car illustrated in layer 143.

Figure 2 is shown as an illustrative example in comparison to a real-life example, wherein a two-dimensional digital image with subsections could be a detailed view of a car interior, wherein each of the layers could illustrate different interior details, such as different available accessories. The two-dimensional images are preferably readings of a computer generated three-dimensional CAD-image, since depth information for various objects and the like could then be easily derivable for the two-dimensional image. An important aspect of the inventive method is its ability to in a correct way position layers and display the resulting image, wherein the user would view and understand each of the layers position at the correct depth position within a two-dimensional perspective view of the two-dimensional image.

In figure 3 is shown an overview of a computer system configured in a client-server computer configuration according to an embodiment of the present invention. One or several client(s) 160, 161 is/are connected to a server 180, wherein the clients 160, 161 and server 180 are interactively connected using communication means 170, such as the Internet or a local area network (LAN).

For example, a browser running on the client 160, 161 can be configured for executing an interactive computer application which provides the ability to perform at least some of the steps discussed above with reference to figure 1. The computer application has a GUI and is preferably adopted to receive interactions from the user, such as input provided from a keyboard and/or a mouse. Furthermore, the computer application is preferably designed in such a way as to provide possibilities for the user to browse through and select among a plurality of available configurations.

The user interacts through the client(s) 160, 161 and sends requests to the server 180 for e.g. a reconfiguration of the image. The request sent from the client 160, 161 to the server 180 is transmitted over the communication means (Internet). As the server 180 receives the request for image reconfiguration, it analyzes the request and decides if the whole image, a subsection and/or only one or a plurality of layers needs to be updated. When decided, the server 180 sends the image data (image, subsections and/or layers depending on the analysis) back to the client 160, 161. The client receives the image data and replaces the image, subsections and/or layers according to the user interaction and the depth information provided with each of the layers. The image is then displayed for the user, who has the ability to once again reconfigure the displayed image.

For more complex pictures, the two two-dimensional image layers depth values are preferably associated with individual image elements (pixels) of the layers. Hereby, when composing the image of the layers, the order of overlapping image elements is determined separately based on the depth values associated with the overlapping image elements. Hereby, the layers can be the layers can be non-parallel, and e.g. cross each other in the depth direction, be intertwined etc.

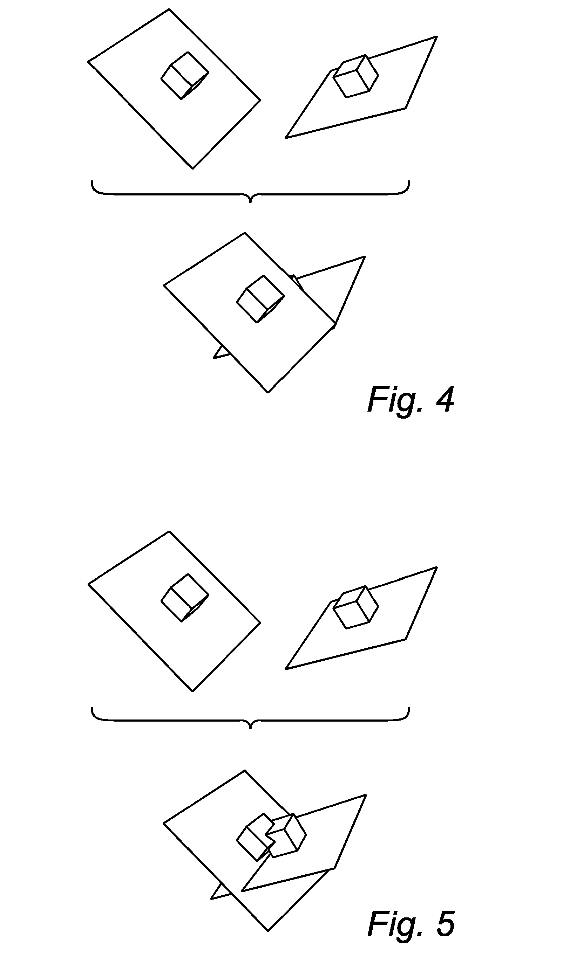

This situation is schematically illustrated in fig 4 and 5. In fig 4 an image is composed of two different layers, each defining perspective view of a structure. In case each layer is associated with only one, common depth value, the resulting picture will be as the resulting image in Fig 4, where in the places of overlap, one of the structures covers the structure illustrated in the other layer. However, in case the structures are interconnected in some way, such a simple way or arranging the layers may be inadequate. In such situations, the pixels making up the layer images may all be associated with individual depth values. Hereby, the order of the overlapping parts may be determined on a pixel-by-pixel basis, whereby a resulting as illustrated in Fig 5 may be obtained. In this case, the interconnection between the structures illustrated in the two layers is clearly visible, and the layers may be modified and/or exchanged while maintaining this interrelationship between the structures.

Accordingly, this makes it possible to exchange or modify layers of an image or a sub-sections of an image even in very complex image structures. This is e.g. of great importance when illustrating different car alternatives, where optional accessories, of different sizes and interconnecting in various ways, may be chosen for display.

Although the present invention and its advantages have been described in detail with reference to specific exemplary embodiments, it should be understood that various changes, substitutions and alternations can be made herein without departing from the spirit and scope of the invention as defined by the appended claims.
For example, the invention is not limited to be used in the car industry, but could be used for interactive interior design planning and selection. Furthermore, the computer system is not limited to a client-server configuration, but the method can be performed by a stand-alone computer, wherein the image data can be stored e.g. on a removable disk.

## Claims

1. A method for user adaptation of interactive image data, comprising the steps of:
- providing a two-dimensional digital image as a view of a virtual three-dimensional digital image;
- defining at least one subsection in said two-dimensional digital image comprising at least two layers stacked on top of each other; and
- associating each of said layers with a depth identification tag corresponding to said layers depth position in said stack of layers;
wherein each of said layers are independently shufflable and/or exchangeable in said stack of layers.

2. A method according to claim 1, wherein said shuffling and/or exchanging of said layers is done upon a user interaction.

3. A method according to any of claims 1 or 2, wherein said two-dimensional digital image, said subsections and at least one alternative layer are stored on a storage medium.

4. A method according to any of the preceding claim, wherein said exchanging of layers is done on-demand and in interaction with a storage medium.

5. A method according to any of claims 3 or 4, wherein said steps of providing, defining and associating is executed in a processing device and where said at least one alternative layer is transferred from said storage medium to said processing device upon a user interaction.

6. A method according to any of the preceding claim, wherein the provision of a two-dimensional digital image is provided as a two-dimensional reading of computer generated three-dimensional design data, such as a Computer Aided Design (CAD).

7. A method according to any one of the preceding claims, wherein the layers are provided with a depth identification tag associating individual depth position values for different parts of said layers.

8. A method according to claim 7, wherein the depth identification tag associates an individual depth position value for each pixel in said layers.

9. A computer system for user adaptation of interactive image data, comprising
- means for providing a two-dimensional digital image as a view of a virtual three-dimensional digital image;
- means for defining at least one subsection in said two-dimensional digital image comprising at least two layers stacked on top of each other; and
- means for associating each of said layers with a depth identification tag corresponding to said layers depth position in said stack of layers;
wherein each of said layers are independently shufflable and/or exchangeable in said stack of layers.

10. A computer system according to claim 9, wherein said two-dimensional digital image, said subsections and at least one alternative layer are stored on a storage medium.

11. A computer system according to claim 9 or 10, wherein said computer system is arranged in a stand-alone computer configuration.

12. A computer system according to claim 9 or 10, wherein said computer system is arranged in a client-server configuration, wherein said client and server are interactively connected using communication means.

13. A computer system according to claim 12, wherein said subsections and at least one alternative layer are stored on a storage medium, and wherein said storage medium is arranged together with said server and where said at least one alternative layer is transferred from said storage medium to said client upon a user interaction.

14. A computer system according to any one of claims 9 to 13, wherein said computer system further comprises means for interactive communications between said computer system and a user, such as a keyboard, mouse and computer screen.

15. A computer system according to any one of the claims 9-14, wherein the provision of a two-dimensional digital image is provided as a two-dimensional reading of computer generated three-dimensional design data, such as a Computer Aided Design (CAD).

16. A computer program product comprising computer program code to perform the steps of:
- providing a two-dimensional digital image as a view of a virtual three-dimensional digital image;
- defining at least one subsection in said two-dimensional digital image comprising at least two layers stacked on top of each other; and
- associating each of said layers with a depth identification tag corresponding to said layers depth position in said stack of layers;
wherein each of said layers are independently shufflable and exchangeable in said stack of layers.

17. A method for composing a two-dimensional digital image, comprising the steps of:
- providing at least two two-dimensional image layers, each layer being associated with at least a subsection of said digital image, wherein each layer consists of several image elements;
- associating each image element of the layers with a depth value; and
- combining said layers for composition of said digital image, wherein in overlapping parts of said layers, the order of overlapping image elements is determined based on the depth values associated with said overlapping image elements.

18. A method according to claim 17, wherein at least some of said layers are independently exchangeable.

19. A two-dimensional digital image comprising at least two two-dimensional image layers, each layer being associated with at least a subsection of said digital image, wherein each layer consists of several image elements, each image element of the layers being associated with a depth value;
wherein in overlapping parts of said layers, the order of overlapping image elements is determined based on the depth values associated with said overlapping image elements.
